# EUROPEAN PATENT SPECIFICATION

(11) **EP 3 181 980 B1**
(45) Date of publication and mention of the grant of the patent: **20.11.2019**
(21) Application number: 16002614.2
(22) Date of filing: 08.12.2016
(51) Int. Cl.: F16L 59/065

(54) **METHOD FOR MANUFACTURING VACUUM HEAT INSULATOR AND VACUUM HEAT INSULATOR**
VERFAHREN ZUR HERSTELLUNG EINES VAKUUMWÄRMEISOLATORS UND VAKUUMWÄRMEISOLATOR
PROCÉDÉ DE FABRICATION D'UN ISOLANT THERMIQUE SOUS VIDE ET ISOLANT THERMIQUE SOUS VIDE

(30) Priority: 17.12.2015 JP 2015246118; 04.11.2016 JP 2016216210
(43) Date of publication of application: 21.06.2017
(73) Proprietor: AGC Inc., Tokyo 100-8405 (JP)
(72) Inventor: Shinohara, Nobuhiro, Tokyo, 100-8405 (JP); Hayashi, Tomoharu, Tokyo, 100-8405 (JP); Hamada, Yuya, Tokyo, 100-8405 (JP)
(74) Representative: Müller-Boré & Partner Patentanwälte PartG mbB

(56) References cited:
- JP-A- H06 156 487
- JP-A- H11 210 983
- JP-A- 2007 016 927

## Description

### TECHNICAL FIELD

The present invention relates to a method for manufacturing a vacuum heat insulator and a vacuum heat insulator.

### BACKGROUND

Usually, the vacuum heat insulator is fabricated by putting a core member of porous body made by solidifying glass fiber or powder of silica or the like into a bag-shaped envelop having airtightness and having heat-weld layers on its inner surface, and heat-welding under reduced pressure the heat-weld layers together at a portion of the envelop where the core member does not exist, namely, an outside portion of the outer periphery of the core member to thereby perform heat sealing.

In this case, dust is generated due to contact of the core member with the envelop at an opening part of the envelop at the time when the core member is put into the bag-shaped envelop, and the dust adheres to the heat-weld layers near the opening part in some cases. When the heat sealing is performed as described above in this state, a seal part holding the dust is formed near the opening part.

The vacuum heat insulator obtains high heat-insulation property by keeping the interior thereof under reduced pressure, but includes an example having a problem of dust existing in the seal part as described above which decreases the degree of vacuum in a long-term use and decreases the heat-insulation performance.

To solve the problem, for example, Patent Reference 1 discloses a technique of reducing the failure of sealing by increasing the width of the seal part as described below. More specifically, the seal part of the vacuum heat insulator is usually provided in a frame shape at an outside portion of the outer periphery of the housed core member at an appropriate distance from the outer periphery of the core member. Therefore, a region outward from the outer periphery of the core member to the inner periphery of the seal part is a non-seal region which is not sealed. In Patent Reference 1, the width of the seal part is increased by heat-welding the non-seal region in a non-contact manner.

However, the above-described method is not for reducing the amount of dust held by the seal part and therefore cannot sufficiently suppress the decrease in degree of vacuum in the vacuum heat insulator.

Besides, there are proposed methods of, for example, preventing the holding of powder in the seal part of the vacuum heat insulator by covering the whole core member with nonwoven fabric or the like which has air permeability but does not allow powder to pass therethrough (refer to, for example, Patent Reference 2), or providing a filter which allows air to pass therethrough but does not allow powder to pass therethrough at an opening part of the bag-shaped envelop (refer to, for example, Patent Reference 3), so as to prevent powder from scattering from the core member. Furthermore, Patent Reference 4 describes that, since the ultrasonic seal generates vibration by ultrasonic waves and is welded by frictional heat at the film interface, it is possible to remove clogging, such as the core material attached to the film interface, by this vibration.

In the above-described methods, however, excessive processes or members are added to the manufacturing process of the vacuum heat insulator, leading to a factor of increase in cost, or a disadvantage of difficulty in coping with a special shape article having a core member formed with a hole in the case of covering the whole core member with nonwoven fabric.

### PRIOR ART DOCUMENT

### PATENT REFERENCE

[Patent Reference 1] JP-A 2007-182997
[Patent Reference 2] JP-B 5394474
[Patent Reference 3] JP-B 5161781
[Patent Reference 4] JP-A-2007-016927

### SUMMARY OF THE INVENTION

### PROBLEMS TO BE SOLVED BY THE INVENTION

The present invention has been made from the above viewpoints, and an object of the present invention is to provide a method for easily and economically manufacturing a vacuum heat insulator in which a decrease in degree of vacuum is suppressed in a long-term use, and a vacuum heat insulator in which a decrease in degree of vacuum is suppressed in a long-term use.

### MEANS FOR SOLVING THE PROBLEMS

The present invention is defined by the independent claim. Preferred features are defined by the dependent claims.

### EFFECTS OF THE INVENTION

According to the present invention, it is possible to easily and economically manufacture a vacuum heat insulator in which the decrease in degree of vacuum is suppressed in a long-term use. It is also possible to provide a vacuum heat insulator in which the decrease in degree of vacuum is suppressed in a long-term use.

### BRIEF DESCRIPTION OF THE DRAWINGS

[Fig. 1] is a view schematically illustrating an example of a manufacturing method of the present invention.
[Fig. 2] is a view schematically illustrating another example of the manufacturing method of the present invention.
[Fig. 3A] is a plane view illustrating an envelop in which a core member is housed in the example of the manufacturing method illustrated in Fig. 1.
[Fig. 3B] is a cross-sectional view taken along a line A-A of the envelop in which the core member is housed illustrated in Fig. 3A.
[Fig. 4A] is a plane view illustrating an envelop (vacuum heat insulator precursor) in which a core member is housed and which is welded under reduced pressure in the example of the manufacturing method illustrated in Fig. 1.
[Fig. 4B] is a cross-sectional view taken along a line B-B of the envelop (vacuum heat insulator precursor) in which the core member is housed and which is welded under reduced pressure illustrated in Fig. 4A.
[Fig. 5A] is a plane view illustrating a vacuum heat insulator 100A-I manufactured in the example of the manufacturing method illustrated in Fig. 1.
[Fig. 5B] is a cross-sectional view taken along a line C-C of the vacuum heat insulator 100A-I illustrated in Fig. 5A.
[Fig. 6A] is a plane view illustrating a vacuum heat insulator 100A-II manufactured in the example of the manufacturing method illustrated in Fig. 1.
[Fig. 6B] is a cross-sectional view taken along a line C-C of the vacuum heat insulator 100A-II illustrated in Fig. 6A.
[Fig. 7] is an enlarged plane view of a post-housing welded part and a protective welded part of the vacuum heat insulator 100A-II manufactured in the example of the manufacturing method illustrated in Fig. 1.
[Fig. 8] is a flowchart illustrating the example of the manufacturing method of the present invention.
[Fig. 9] is a flowchart illustrating the another example of the manufacturing method of the present invention.

### MODES FOR CARRYING OUT THE INVENTION

Hereinafter, embodiments of the present invention will be described referring to the drawings. The present invention is not limited to them. In the following description, substantially of "substantially the same dimension" or the like means a range where the dimension seems the same in visual observation. "Inside" and "outside" in a vacuum heat insulator refer to a side from an outer periphery toward a center and a side from the center toward the outer periphery when the vacuum heat insulator is viewed in a plane direction, respectively.

### [Method for manufacturing the vacuum heat insulator]

A method for manufacturing a vacuum heat insulator of the present invention is a method for manufacturing a vacuum heat insulator having a configuration of the following (I), preferably (II) in which a core member is encapsulated under reduced pressure in an envelop.
(I) The vacuum heat insulator according to the manufacturing method of the present invention is a vacuum heat insulator including an envelop made by arranging films each having a heat-weld layer and an airtight layer such that the heat-weld layers face each other, and a core member housed in an interior of the envelop, the envelop having a welded part where the heat-weld layers are heat-welded together in a predetermined width over an entire periphery of the core member and a protective welded part formed outside the welded part, and the vacuum heat insulator having the interior in an reduced-pressure state.

The vacuum heat insulator having the configuration of (II) being a preferable configuration of the vacuum heat insulator according to the manufacturing method of the present invention includes an envelop made by arranging films each having a heat-weld layer and an airtight layer such that the heat-weld layers face each other, and a core member housed in an interior of the envelop, the envelop having a welded part which is located on an outer side of an outer periphery of the core member and where the heat-weld layers are heat-welded together over an entire periphery of the core member and a protective welded part formed outside the welded part to partially overlap with at least a part of the welded part, and the vacuum heat insulator having the interior in an reduced-pressure state.

The manufacturing method of the present invention is a method for manufacturing the vacuum heat insulator having the configuration of (I), preferably (II), and includes the following steps of (1), (2), (3) and (41) for the configuration of (I). For the configuration of (II), the manufacturing method includes the steps of (1), (2), (3) and (411) made by specializing the step of the (41) in the configuration of (I) to the following step of (411).

A step of (1) is housing the core member in the interior of the envelop having an unwelded part where a portion becoming the welded part is unwelded in the welded part (hereinafter, referred to as the step (1) or a "housing step").
A step of (2) is heat-welding the heat-weld layers together under reduced pressure into a state in which all the unwelded part is welded, after or without heat-welding in advance the heat-weld layers of the unwelded part while leaving a part thereof necessary for pressure reduction, for the envelop housing the core member, wherein any of the heat-welding is performed to leave an end part of a predetermined width from an outer edge of the envelop housing the core member (hereinafter, referred to as the step (2) or a "post-housing welding step").
A step of (3) is cleaning surfaces of the heat-weld layers facing each other at the end part of the envelop left outside a post-housing welded part which has been heat-welded after housing the core member (hereinafter, referred to as the step (3) or a "cleaning step").
A step of (41) is forming the protective welded part to have a region where the cleaned heat-weld layers are heat-welded together outside the post-housing welded part (hereinafter, referred to as the step (41) or a "protective welding step I").
A step of (411) is forming the protective welded part to have a predetermined overlapping width on an inside from a side on an outside of the post-housing welded part and have a region where the cleaned heat-weld layers are heat-welded together (hereinafter, referred to as the step (411) or a "protective welding step II").

Note that in the step (41), it is only necessary that the protective welded part is formed outside the post-housing welded part, and an aspect in which the protective welded part is formed having an overlapping portion with the post-housing welded part as in (411) is also included. Further, the step (41) and the step (4II) are sometimes collectively called the step (4). The protective welding step I and the protective welding step II described later are sometimes collectively called the protective welding step.

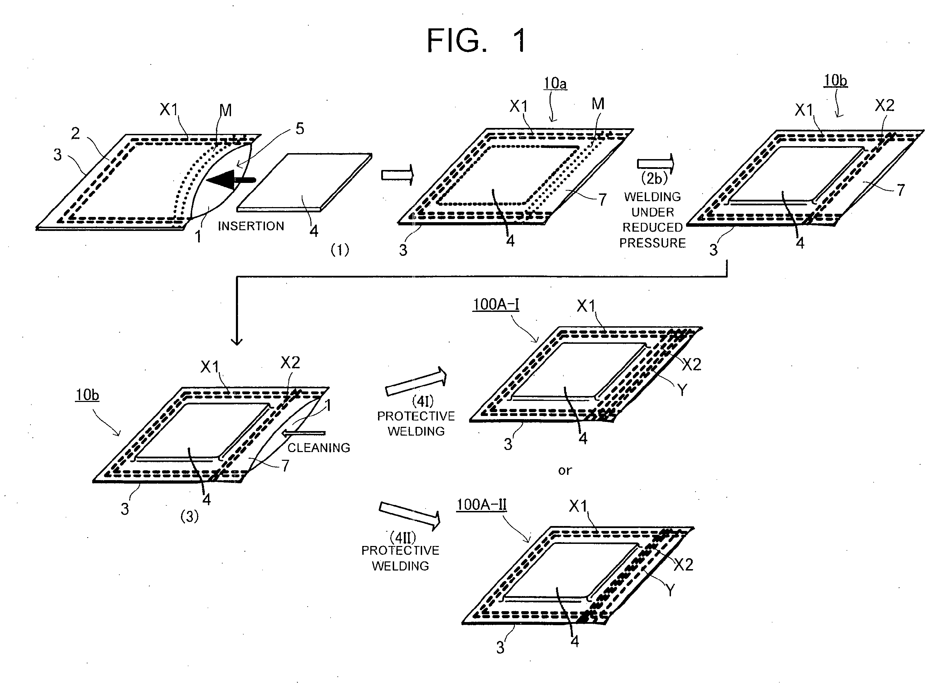

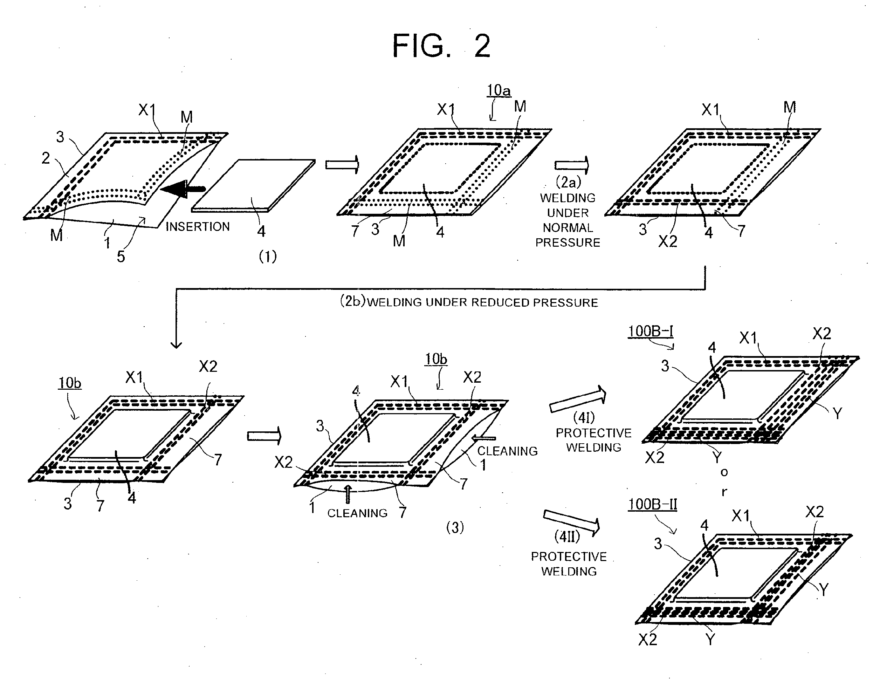

Hereinafter, the steps in the manufacturing method of the present invention will be described. Fig. 1 and Fig. 2 are views schematically illustrating examples of the manufacturing method of the present invention, respectively. In the manufacturing method of the present invention, the above step (2) is a step of (2b) heat-welding the heat-weld layers together under reduced pressure into a state in which all the unwelded part of the envelop is welded (hereinafter, referred also to as a step (2b) or a "reduced-pressure welding step"), through a step (2a) heat-welding in advance the heat-weld layers of the unwelded part while leaving a part thereof necessary for pressure reduction (hereinafter, referred also to as a step (2a) or a "normal-pressure welding step") or not though the step (2a), for the envelop after housing the core member obtained in the step (1). In other words, in the step (2), the step (2a) is an optional step. Fig. 1 illustrates a case where the step (2) is composed only of the step (2b), and Fig. 2 illustrates a case where the step (2) is composed of the step (2a) and the step (2b).

Note that in Fig. 1 and Fig. 2, signs (1), (2a), (2b), (3), (41) and (411) correspond to the above step (1), step (2a), step (2b), step (3), step (41), and step (4II) respectively. Note that in Fig. 1 and Fig. 2, the step (41) is illustrated as a case where the protective welded part is formed outside the post-housing welded part in a manner not to have a portion overlapping with the post-housing welded part. The step (4II) is a case where the protective welded part is formed outside the post-housing welded part in a manner to have a portion overlapping with the post-housing welded part as described above.

Besides, in Fig. 1, the vacuum heat insulator 100A-I obtained through the steps (1), (2b), (3) and (41) corresponds to the vacuum heat insulator having the configuration of the above (I), and the vacuum heat insulator 100A-II obtained through the steps (1), (2b), (3) and (4II) corresponds to the vacuum heat insulator having the configuration of the above (II) that is a preferable aspect of the configuration of the above (I). Besides, in Fig. 2, the vacuum heat insulator 100B-I obtained through the steps (1), (2a), (2b), (3) and (41) corresponds to the vacuum heat insulator having the configuration of the above (I), and the vacuum heat insulator 100B-II obtained through the steps (1), (2a), (2b), (3) and (411) corresponds to the vacuum heat insulator having the configuration of the above (II) that is a preferable aspect of the configuration of the above (I).

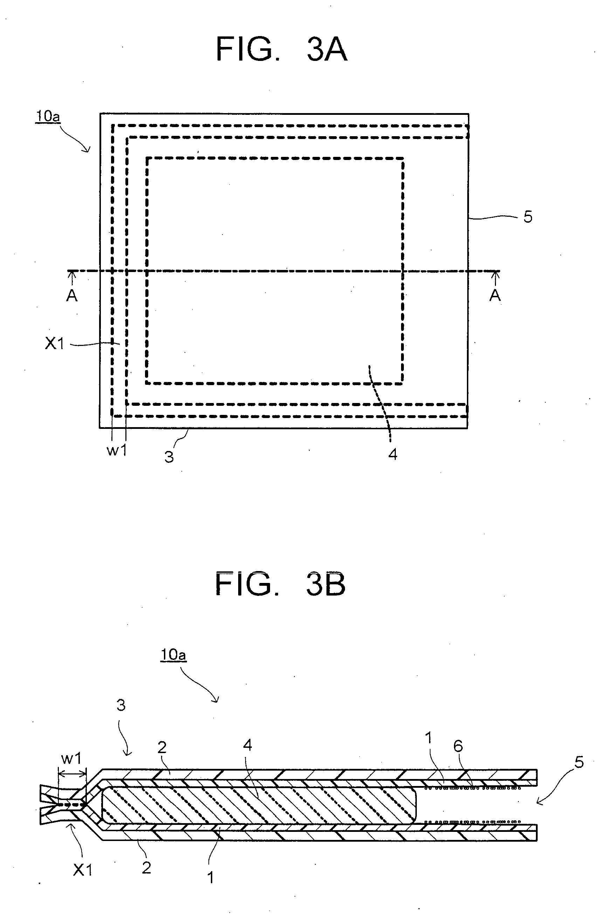

First, the method for manufacturing the vacuum heat insulator 100A-I of the present invention in the case where the step (2) is composed only of the step (2b) illustrated in Fig. 1 will be described. Fig. 3A, Fig. 4A and Fig. 5A illustrate plane views of an envelop after completion of the step (1) in which the core member is housed (hereinafter, referred also to as a "core member-housing envelop"), an envelop after completion of the step (2) in which the core member is housed and which is welded under reduced pressure (hereinafter, referred also to as a "vacuum heat insulator precursor"), and a vacuum heat insulator 100A-I obtained after completion of the step (41), in one example of the manufacturing method illustrated in Fig. 1, respectively. Fig. 3B, Fig. 4B and Fig. 5B are cross-sectional views illustrating the members whose plane views are illustrated in Fig. 3A, Fig. 4A and Fig. 5A, respectively.

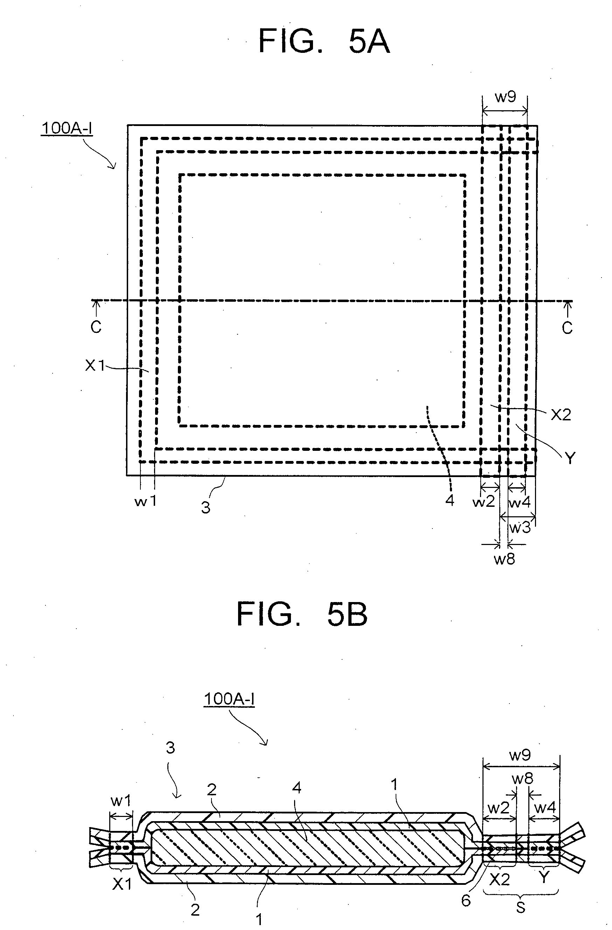

The vacuum heat insulator having the configuration of the vacuum heat insulator (I) and obtained by the manufacturing method schematically illustrated in Fig. 1 is the vacuum heat insulator 100A-I illustrated in Fig. 5A, Fig. 5B. The vacuum heat insulator 100A-I has an envelop 3 made by arranging films each having a heat-weld layer 1 and an airtight layer 2 such that the heat-weld layers 1 face each other, and a core member 4 housed in the interior of the envelop 3. The envelop 3 has welded parts X1 and X2 which are located on the outer side of the outer periphery of the core member 4 and where the heat-weld layers 1 are heat-welded together in a predetermined width over the entire periphery of the core member 4.

Note that in the vacuum heat insulator 100A-I, the welded part X1 is a welded part (pre-housing welded part) formed before the core member 4 is housed in the envelop 3, and the welded part X2 is a welded part (post-housing welded part) formed after the core member 4 is housed in the envelop 3. The welded part X1 and the welded part X2 form a frame-shaped welded part without a break in a manner to surround the entire periphery of the core member 4, and make it possible to bring the interior of the envelop 3 housing the core member 4 into a reduced pressure state. Hereinafter, the entire frame-shaped welded part without a break composed of the welded part X1 and the welded part X2 is referred to also as a welded part X.

In the vacuum heat insulator 100A-I illustrated in Fig. 5A and Fig. 5B, the envelop 3 has rectangular main surfaces and film shape, the core member 4 has rectangular main surfaces and plate shape, and the welded part X has an inner periphery and an outer periphery each formed in a rectangular frame shape. In the welded part X of the vacuum heat insulator 100A-I, three sides of the frame are the welded part X1, and the remaining one side is the welded part X2. In the vacuum heat insulator 100A-I, the welded part X2 has a protective welded part Y formed outside the welded part X2. The protective welded part Y forms a region where it is welded in a frame shape without a break in a manner to surround the entire periphery of the core member 4 together with the welded part X1. This configuration enables cutting off the welded part X2 formed after the core member 4 is housed in the envelop 3, from an outside atmosphere. As a result, the obtained vacuum heat insulator 100A-I becomes a vacuum heat insulator in which the decrease in degree of vacuum is suppressed.

In the manufacturing method of the present invention, it is essential to provide the protective welded part Y formed outside the welded part X2, for the welded part X2 formed after the core member 4 is housed in the envelop 3. Furthermore, the protective welded part Y may be provided for the welded part X1. In this case, the protective welded part Y may be configured to form the region that is welded in a frame shape without a break in a manner to surround the entire periphery of the core member only by the protective welded part. The welded part X1 is a welded part that is formed before the core member 4 is housed in the envelop 3, so that almost no dust is held in the welded part. Therefore, the protective welded part Y is not always necessary for the welded part X1. Providing the protective welded part Y for the welded part X1 leads to addition of an excessive process to the manufacturing process, causing an increase in cost, but has an advantage giving higher airtightness to the obtained vacuum heat insulator.

Here, another configuration of the above frame-shaped welded part X in the vacuum heat insulator 100A-I may be a configuration in which two sides of the frame are the welded part X1 and the remaining two sides are the welded part X2, a configuration in which one side of the frame is the welded part X1 and the remaining three sides are the welded part X2, or a configuration in which all sides are the welded part X2. In any case, the protective welded part Y is provided outside the welded part X2, for the welded part X2 of the welded part X. In any case, the protective welded part Y forms the region that is welded in a frame shape without a break in a manner to surround the entire periphery of the core member 4 together with the welded part X1 or only by the protective welded part Y. Providing, as described above, the protective welded part Y for the welded part X2 formed after the core member 4 is housed in the envelop 3 by the method of the present invention, enables manufacture of the vacuum heat insulator in which the decrease in degree of vacuum is suppressed in a long-term use even when the welded part X2 holds dust due to the core member 4 or the like.

Note that in the vacuum heat insulator 100A-I, the welded part X2 and the protective welded part Y are welded parts obtained in different steps in manufacture and are discriminated from each other, but they cannot be usually distinguished from each other in the obtained vacuum heat insulator 100A-I. In this specification, a welded part composed only of the welded part X1, a welded part formed of the welded part X2 (or optionally X1) and the protective welded part Y (including an unwelded part between the welded part X2(or optionally X1) and the protective welded part Y), and a welded part where the welded part X2 (or optionally X1) and the protective welded part Y are united together are collectively called a "seal part".

### (Step (1))

In Fig. 1, (1) illustrates the step (1) of inserting the core member 4 into the envelop 3 where the welded part X is partially unwelded to thereby house the core member 4 in the envelop 3. Further, Figs. 3A and 3B illustrate a core member-housing envelop 10a after completion of the step (1). In the manufacturing method of the present invention, a portion, where a portion becoming the welded part X in a final vacuum heat insulator is unwelded in the manufacturing process, is called an unwelded part M. In the step (1), the envelop 3 having the unwelded part M is used.

The envelop 3 illustrated in (1) of Fig. 1 and Figs. 3A and 3B is a bag-shaped envelop having a configuration in which two films being rectangle and having the same size, each film having the heat-weld layer 1 and the airtight layer 2 laminated, are superposed with the heat-weld layers 1 of the films facing each other, and having three sides heat-welded in advance in a predetermined width (w1). In other words, three sides of the frame-shaped welded part X which is to be finally composed of four sides have been already formed as the welded part X1 and the remaining one side is the unwelded part M, so that the envelop 3 has a bag shape having an opening part 5 corresponding to the unwelded part M.

The width (w1) of the welded part X is not particularly limited as long as it is a width which hardly causes a decrease in degree of vacuum in a long-term use as the vacuum heat insulator. Though depending on the constituent material of the heat-weld layer 1, the size of the envelop 3 and so on, concretely, the width (w1) of the welded part X1 is preferably 5 to 20 mm, and more preferably 5 to 10 mm. Besides, the distance between the side on the outside of the welded part X1 being the outer periphery at the welded part X1 and the outer periphery of the envelop 3 is not particularly limited as long as it is a distance which hardly causes a decrease in degree of vacuum in a long-term use as the vacuum heat insulator. Though depending on the constituent material of the heat-weld layer 1, the size of the envelop 3 and so on, concretely, the distance is preferably about 0 to 15 mm, and more preferably about 1 to 10 mm.

In the step (1) in Fig. 1, the envelop 3 formed in a bag shape as described above is prepared, and the core member 4 formed in a plate shape is inserted into the interior of the envelop 3 through the opening part 5. The main surface of the core member 4 illustrated in Fig. 1 has a size with which the core member 4 can be housed inside the welded part X, and has a thickness with which the core member 4 can be housed in the interior of the envelop 3. In the above manner, the core member-housing envelop 10a is obtained. A plane view and a cross-sectional view of the core member-housing envelop 10a are illustrated in Figs. 3A and 3B. Note that in a cross section of the core member-housing envelop 10a, the interface between the facing heat-weld layers 1 of the envelop 3 does not apparently exist due to welding at the welded part X1, but the interface between the facing heat-weld layers 1 is illustrated by a broken line as an interface before the heat-weld layers 1 are heat-welded at the welded part X1 in Fig. 3B. Hereinafter, the same illustration as above applies to the cross section of the welded part in cross-sectional views.

Examples of materials constituting the envelop 3 and the core member 4 used in the manufacturing method of the present invention include publicly-known materials describe below. Note that the method in the step (1) is a conventional publicly-known method. In the step (1), it is conceivable that in the case where the core member 4 includes a factor of generating dust, dust is generated at the time when the core member 4 is put into the envelop 3 irrespective of the kinds of the envelop 3 and the core member 4 due to contact of the core member 4 with the envelop 3, in particular, at the opening part 5 of the envelop 3, and dust 6 adheres, for example, to the surfaces of the heat-weld layers 1 near the opening part 5 as illustrated in Fig. 3B. In the conventional method, a welded part holding therein the dust is formed at the time when finally heat-welding the opening part, and sometimes causes a decrease in degree of vacuum due to the welded part holding the dust therein. In the manufacturing method of the present invention, the decrease in degree of vacuum due to dust is suppressed by forming the protective welded part holding little or no dust therein by providing the steps (2) to (4) after the step (1).

Note that the "dust" in this specification refers to all of minute particles of matter including the particles generated from the aforementioned core member and being a part of the material constituting the core member, or the like, holding of which can be presumed to induce leakage of the welded part and adversely affect the degree of vacuum of the vacuum heat insulator.

The effect by the manufacturing method of the present invention is particularly conspicuous in the case of using a core member containing powder as a core material because dust is likely to be generated and adhere. As the core member used for the method for manufacturing the vacuum heat insulator of the present invention, a compression-molded body containing powder and fiber is preferable.

### <Envelop>

In the manufacturing method of the present invention, the envelop only needs to be an envelop having a configuration in which a heat-weld layer and an airtight layer are laminated in a film shape, and an envelop usually used for an envelop of a vacuum heat insulator can be used without any particular limitation. The envelop may have and preferably has a surface protection layer in addition to the heat-weld layer and the airtight layer. In this case, the envelop is configured to have the heat-weld layer on the side where the core member is housed, have the airtight layer as an intermediate layer, and have the surface protection layer as the outermost layer.

As the constituting member of the envelop, for example, a laminate film can be used which has a metal layer made of a metal foil or a metal deposited layer as the airtight layer on one surface of the surface protection layer. Further, two kinds of laminate films such as a laminate film having metal foil and a laminate film having a metal deposited layer may be used in combination. The film constituting the envelop further has the heat-weld layer on the metal layer of the laminate film. Here, the sign 2 is described as the airtight layer in the above, but the sign 2 may be the airtight layer itself or may be the laminate film having the airtight layer and the surface protection layer in the drawings.

Examples of the materials constituting the heat-weld layer, the airtight layer, and the surface protection layer of the envelop include the same materials as those constituting the above-described layers usually used for the envelop of the vacuum heat insulator. Concrete examples of the constituent material of the heat-weld layer include low-density polyethylene, linear low-density polyethylene, high-density polyethylene, polypropylene, polyacrylonitrile, non- oriented polyethylene terephthalate, ethylene-vinyl alcohol copolymer, ethylene-tetrafluoroethylene copolymer and so on. The heat-weld layer may be composed of a film made of the materials constituting the heat-weld layers or a composite body made by combining the films.

A concrete example of the constituent material of the airtight layer is metal. As the surface protection layer, a publicly-known material such as a oriented product of a nylon film, a polyethylene terephthalate film, or a polypropylene film can be used.

### <Core member>

As the core member, a publicly-known core member used for a vacuum heat insulator can be used. A concrete example is a core member using a porous body with a gas-phase percentage of about 90% as a material which is processed into a plate shape. Examples of the porous body industrially usable are foam having air permeability, powder, fiber and so on. A material for the core member can be properly selected from the publicly-known materials having heat-insulation performance (hereinafter, referred to as a "heat insulator material") and used according to the use application and required characteristics.

As the foam among them, open-cell foam such as urethane foam, styrene foam, phenol foam or the like can be used. In terms of easy evacuation in vacuum encapsulation, the quantity of airflow of the open-cell foam used as the core member is preferably 1 cm³/cm²sec or more. Besides, as the powder, inorganic powder, organic powder, and a mixture of them can be used, and powder containing, as a main component, dry silica, wet silica, pearlite or the like can be industrially used.

Besides, as the fiber, inorganic fiber, organic fiber, and a mixture of them can be used, and inorganic fiber is advantageous from the viewpoint of cost and heat-insulation performance. As one example of the inorganic fiber, a publicly-known material such as glass wool, glass fiber, alumina fiber, silica alumina fiber, silica fiber, rock wool or the like can be used.

Further, a mixture or a composite of the foam, powder, and fiber can also be applied to the core member. A concrete example of the core member is a composite of a porous powder and fiber, for example, aerogel blanket. Examples of the aerogel blanket include Pyrogel (manufactured by Aspen Aerogels, Inc.) and so on.

Among them, the core member made by compression molding a heat insulator material containing powder into a plate shape will be described below. As the heat insulator material of the core member containing the powder preferably contains fiber in addition to the powder in terms of easily obtaining a core member with high strength. Besides, the heat insulator material of the core member may contain a binder in addition to the fiber, and preferably contains the binder at a lower ratio or may contain no binder, to obtain better heat-insulation performance.

### <<Powder>>

A case of the core member containing powder will be described below as an example. As the powder, a publicly-known powder usually used for the core member can be used. Concrete examples of the powder include fumed silica, porous silica, radiation suppressing material powder and so on. The powder preferably contains fumed silica because a core member having sufficient strength is easily obtained. As the powder, only one kind may be used or two or more kinds may be used in combination.

As concrete examples of the fumed silica include Aerosil 200 (specific surface area 200 m²/g, manufactured by NIPPON AEROSIL CO., LTD.), Aerosil 300 (specific surface area 300 m²/g, manufactured by NIPPON AEROSIL CO., LTD.), CAB-O-SIL M-5 (specific surface area 200 m²/g, manufactured by Cabot Specialty Chemicals Inc.), CAB-O-SIL H-300 (specific surface area 300 m²/g, manufactured by Cabot Specialty Chemicals Inc.), REOLOSIL QS30 (specific surface area 300 m²/g, manufactured by Tokuyama Corporation) and so on. As the fumed silica, only one kind may be used or two or more kinds may be used in combination.

Concrete examples of the porous silica include M.S.GEL, SUNSPHERE (each manufactured by AGC Si-Tech Co., Ltd.) and so on.

Examples of the radiation suppressing material powder include metal particles (aluminum particle, silver particle, gold particle and so on), inorganic particles (particle of graphite, carbon black, silicon carbide, titanium oxide, tin oxide, iron oxide, potassium titanate and so on) and so on.

As the binder, an inorganic binder such as sodium silicate, aluminum phosphate, magnesium sulfate, magnesium chloride or the like is preferably dissolved in a solvent and used as a binder solution, and an aqueous solution is more preferable.

### <<Fiber>>

When the fiber is contained in the heat insulator material, a core member with high strength is easily obtained. As the fiber, fiber usually used for the vacuum heat insulator can be used, and examples of the fiber include resin fiber and inorganic fiber. The inorganic fiber of them is preferable in terms of easily suppressing a decrease in heat-insulation performance due to a decrease in degree of vacuum because of less outgas under vacuum, and in terms of excellent heat resistance.

Examples of the inorganic fiber include alumina fiber, mullite fiber, silica fiber, glass wool, glass fiber, rock wool, slag wool, silicon carbide fiber, carbon fiber, silica alumina fiber, silica alumina magnesia fiber, silica alumina zirconia fiber, silica magnesia calcia fiber and so on.

### <<Ratios of powder, binder, and fiber>>

The ratio of the fumed silica in the powder (100 mass%) is preferably 50 to 100 mass%, more preferably 70 to 100 mass%, and particularly preferably 80 to 100 mass%. When the ratio of the fumed silica is equal to or more than the lower limit value of the above-described range, a core member with high strength is easily obtained.

In the case where the powder contains the radiation suppressing material powder, the ratio of the radiation suppressing material powder in the powder (100 mass%) is preferably 3 to 30 mass%, more preferably 5 to 25 mass%, and particularly preferably 10 to 20 mass%.

The ratio of the fiber is preferably 1 to 30 parts by mass, more preferably 2 to 20 parts by mass, and particularly preferably 4 to 10 parts by mass as an additive amount relative to 100 parts by mass of the powder. When the ratio of the fiber is equal to or more than the lower limit value of the above-described range, a core member with high strength is easily obtained. When the ratio of the fiber is equal to or less than the upper limit value of the above-described range, the increase in solid heat transfer by the fiber can be suppressed, so that the decrease in heat-insulation performance is easily suppressed.

A preferable composition of the powder in the case of using powder as the core member is, by mass ratio, fumed silica: porous silica: radiation suppressing material powder of 70 to 90:0 to 20:10 to 20. A preferable composition of the material of the core member when containing fiber together with powder is, by mass ratio, fumed silica: porous silica: fiber: radiation suppressing material powder of 70 to 90:0 to 20:5 to 10:5 to 20.

### (Step (2))

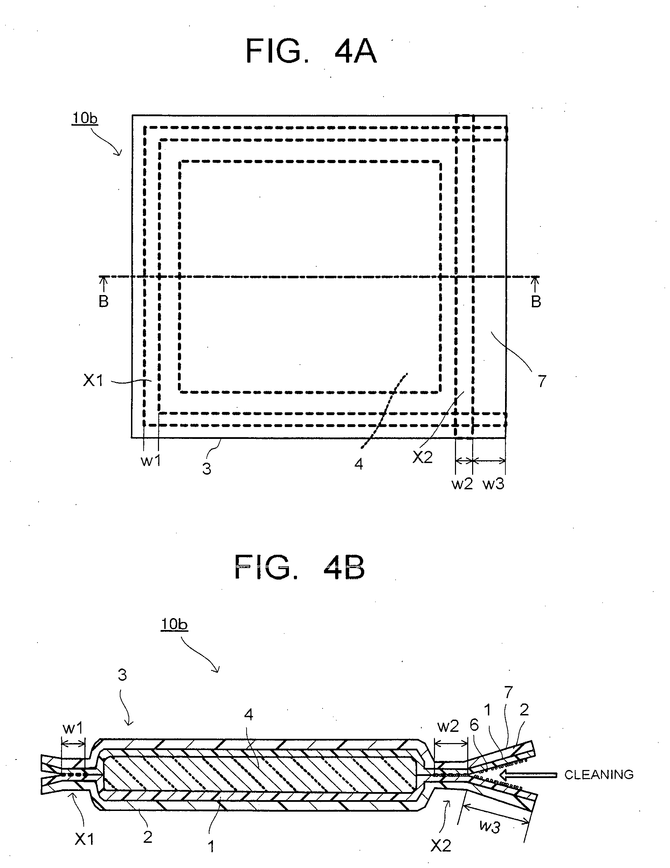

As described above, in the method for manufacturing the vacuum heat insulator 100A-I illustrated in Fig. 1, the step (2) is composed only of the step (2b) of heat-welding the heat-weld layers 1 together under reduced pressure into a state in which all the unwelded part M is welded, for the core member-housing envelop 10a being the envelop 3 housing the core member 4, namely, the reduced-pressure welding step. The vacuum heat insulator precursor obtained after completion of the step (2) is illustrated with a sign of 10b as a state of being returned to the atmospheric pressure condition after the above reduced pressure heat-welding in Fig. 1. Further, a plane view and a cross-sectional view of the vacuum heat insulator precursor 10b are illustrated in Figs. 4A and 4B. Note that the step (2a) being an optional step in the step (2), namely, the normal-pressure welding step will be described in the method for manufacturing a vacuum heat insulator 100B illustrated in Fig. 2.

In Fig. 1, in (2b), the core member-housing envelop 10a prepared in (1) is placed under a reduced pressure condition and subjected to heat-welding into a state in which all the unwelded part M of the envelop 3 is welded. More specifically, to bring the remaining one side except the three sides which have been already formed as the welded part X1 of the frame-shaped welded part X finally composed of four sides into a welded state, the heat-weld layers 1 facing each other at a portion of the remaining one side are heat-welded together to obtain the vacuum heat insulator precursor 10b. More specifically, the vacuum heat insulator precursor 10b has a configuration in which the whole frame-shaped welded part X is welded and the core member 4 is encapsulated under reduced pressure to be located therein. Note that the welded part obtained by heat-welding in the step (2b) is the welded part (post-housing welded part) X2 formed after the core member 4 is housed in the envelop 3.

Besides, a bent portion made by bending one film having heat-weld layer and an airtight layer laminated with the heat-weld layers of the film facing each other, is substituted for one side of the welded part X1 of the envelop 3 in step (1) in Fig. 1. Note that in the step (2b), temporal tacking of the outside of the unwelded part M with a clip or the like is preferable because the displacement of the envelop can be prevented when vacuum is formed.

A width (w2) of the welded part X2 in the vacuum heat insulator precursor 10b is not particularly limited as long as it is a width with which the reduced pressure state can be maintained in the interior of the envelop by the formation of the welded part X2 and which hardly causes a decrease in degree of vacuum in a long-term use as the vacuum heat insulator together with the protective welded part Y formed to assist the sealing function of the welded part X2 afterwards. The width (w2) may be the same as or different from the width (w1) of the above welded part X1. Though depending on the configuration or the like of the protective welded part Y, concretely, the width (w2) of the welded part X2 is preferably 5 to 20 mm.

Further, in the step (2b), the heat-welding for forming the welded part X2 is performed while leaving an end part 7 having a predetermined width (w3) toward the inside from the outer edge of the envelop 3 housing the core member 4. The width (w3) of the end part 7 is the distance between the side on the outside of the welded part X2 being the outer periphery at the welded part X2 and the outer edge of the envelop 3, and is not particularly limited as long as it is a width with which the protective welded part Y can be formed in the step (4) after the step (3) performed next. The width (w3) is appropriately adjusted in accordance with a later-described width (w4) of the protective welded part Y, and a width (w8) of the unwelded part between the welded part X2 and the protective welded part Y in the vacuum heat insulator 100A-I or an overlapping width (w5) of the welded part X2 and the protective welded part Y in the vacuum heat insulator 100A-II or the like. The width (w3) of the end part 7 is preferably adjusted so that the distance from the side on the outside of the protective welded part Y to the outer edge of the envelop 3 is about 0 to 15 mm.

As an apparatus for executing the step (2b), an apparatus usually used for a vacuum heat insulator manufactured by inserting the plate-shaped core member into the bag-shaped envelop can be used without any particular limitation. Examples of the apparatus include a vacuum chamber with heat sealing function and so on. Besides, regarding the reduced pressure condition and heat-welding condition in manufacture, the same conditions as those in the case of usually manufacturing the above-described vacuum heat insulator using the apparatus can be applied.

Note that in the vacuum heat insulator 100A-I, the degree of vacuum in the interior of the envelop 3 on the inside of the welded part X of the envelop 3 is preferably 1 × 10³ Pa or less, and more preferably 1 × 10² Pa or less in terms of the fact that excellent heat-insulation performance can be obtained and the life of the vacuum heat insulator is increased.

The manufacturing conditions of the reduced-pressure welding step are preferably set to conditions under which the above-described degree of vacuum can be achieved. Besides, the material constituting the heat-weld layer of the envelop 3 is as described above. In the above heat-welding, a preferable welding temperature is set in accordance with the material. Furthermore, the heat-welding is usually performed under a pressurized condition of about 1 to 5 kg/cm².

Here, in the vacuum heat insulator precursor 10b obtained through the steps (1) and (2b) illustrated in Fig. 1, the welded part X2 being the post-housing welded part which has been heat-welded after housing the core member is formed in a state of holding the dust 6 as it is which has been generated mainly from the core member 4 in the above step (1) and adhered to the surfaces of the heat-weld layers 1 near the opening part 5. In the conventional manufacturing method, there is a risk of increasing the speed of the degree of vacuum decreasing with time due to the leakage from the welded part X2 because the vacuum heat insulator precursor 10b in such a state is made, as it is, into a completed product of the vacuum heat insulator. In the present invention, the risk of increasing the decreasing speed of the degree of vacuum in a long-term use is suppressed by forming the protective welded part Y outside of the welded part X2 preferably in a manner to cover the side on the outside of the welded part X2 so as to assist the sealing function of the welded part X2 further though the step (3) and the step (4I), preferably the step (4II) below.

Note that to reduce the amount of dust held in the welded part X2, for example, the same step as the following cleaning step of removing the dust 6 adhering to the surfaces of the heat-weld layers 1 of the unwelded part which is to become the welded part X2 may be provided between the step (1) and the step (2), namely, after the envelop 3 is housed in the core member 4 and before the welded part X2 being the post-housing welded part is formed. However, the step has sometimes only a small effect of reducing the amount of dust held in the welded part X2 and is thus disadvantageous in efficiency because the dust 6 moves by the operation of reducing the pressure in the step (2b) with a result that a substantial amount of the dust 6 is held in the welded part X2.

### (Step (3))

The step (3) is a step of cleaning the surfaces of the heat-weld layers 1 facing each other at the end part 7 of the envelop 3 left outside the welded part X2 being the post-housing welded part which has been heat-welded after housing the core member 4, for the vacuum heat insulator precursor 10b obtained in the step (2). (3) of Fig. 1 and Fig. 4B are views schematically illustrating the cleaning step.

As has been described in the above, in the vacuum heat insulator precursor 10b obtained in the step (2), the envelop 3 has the end part 7 with the width (w3) outside the welded part X2. As illustrated in (3) of Fig. 1 and Fig. 4B, at the end part 7 of the envelop 3, the two films each having the heat-weld layer 1 and the airtight layer 2 are in a state where they are arranged such that the heat-weld layers 1 face each other, namely, in a state where the heat-weld layers 1 have not been heat-welded. Further, as illustrated in Fig. 4B, the dust 6 which has been generated mainly from the core member 4 in the step (1) and adhered to the surfaces of the heat-weld layers 1 facing each other remains on the surfaces at the end part 7 after the step (2).

The step (3) removes the dust 6 remaining on the surfaces by cleaning the surfaces of the heat-weld layers 1 at the end part 7. As the method of cleaning the surfaces of the heat-weld layers 1, namely, the method of removing the dust 6 remaining on the surfaces of the heat-weld layers 1, various methods are applicable which are usually used for removing the dust such as powder adhering to a resin film or the like.

According to the invention as defined by the independent claim, concrete examples of the method of cleaning include wiping out the dust using paper or cloth, causing the dust to adhere to a sticky material such as an adhesive tape or the like, blowing away the dust by blowing of air, sucking the dust by a vacuum cleaner. Among them, the wiping out the dust using paper or cloth is preferable from the viewpoint of removing the dust without scratching the heat-weld layers. The paper or cloth to be used is preferably the one hardly generating dust by itself. Concretely, the method of wiping out the dust using wet paper or cloth such as wet wipes or the like is particularly preferable because the dust can be easily and effectively removed. The paper or cloth is preferably nonwoven fabric made of synthetic fiber such as rayon or polyester formed into a sheet shape.

Note that when the method of wiping out the dust using the wet paper or cloth is employed in the cleaning step, it is preferable to sufficiently dry the surfaces of the heat-weld layers 1 before the step (4).

### (Step (41))

The step (41) is a step of forming the protective welded part Y performed subsequent to the step (3). The vacuum heat insulator 100A-I obtained after the step (41) in the case of employing the step (41) as (4) is illustrated at the lower right in Fig. 1, together with the vacuum heat insulator 100A-II. Figs. 5A and 5B are a plane view and a cross-sectional view of the vacuum heat insulator 100A-I.

In the step (41), the protective welded part Y is formed in the width (w4) having a region where the heat-weld layers 1 cleaned in the step (3) are heat-welded together outside the welded part X2 being the post-housing welded part which has been heat-welded after housing the core member. The protective welded part Y forms a region where it is heat-welded over the entire periphery of the core member, together with the welded part X1 being the pre-housing welded part.

The protective welded part Y is formed in the width (w4) outside the welded part X2 to be parallel with the welded part X2. The protective welded part Y is also formed to have an unwelded part having the predetermined width (w8) between the side on the outside of the welded part X2 and the side on the inside of the protective welded part Y. Because a region outside the side on the outside of the welded part X2 is the region cleaned in the step (3), the region where the heat-weld layers 1 are heat-welded together in the protective welded part Y is within the region cleaned in the step (3).

From the viewpoint of keeping high sealing effect, the width (w4) of the protective welded part Y is preferably 3 to 15 mm, and more preferably 5 to 10 mm.

As described above, a seal part S is constituted by combining the welded part X2 and the protective welded part Y formed outside the welded part X2 (including an unwelded part between the welded part X2 and the protective welded part Y). A width (w9) of the seal part S is expressed by w2 + w4 + w8. The width (w8) is the width of the unwelded part between the welded part X2 and the protective welded part Y. The width (w8) is preferably 0 to 5 mm. The distance from the side on the outside of the seal part, namely, the side on the outside of the protective welded part Y to the outer periphery of the envelop is preferably 0 to 15 mm, and more preferably 1 to 10 mm.

Note that the same condition as that in the case of usually heat-welding the heat-weld layers of the above-described envelop together is applicable to the condition of the heat-welding when forming the protective welded part Y. Further, the material constituting the heat-weld layer of the envelop is as described above, and a preferable welding temperature is set in accordance with the material in the heat-welding. Furthermore, the heat-welding is usually performed under a pressurized condition of about 1 to 5 kg/cm². Here, in this specification, the heat-welding other than the heat-welding performed under reduced pressure is performed in a normal-pressure environment unless otherwise stated.

In the vacuum heat insulator 100A-I obtained as described above, a substantial amount of the dust 6 is held in the welded part X2 at the seal part S composed of the protective welded part Y and the welded part X2. In contrast, the amount of dust held in the protective welded part Y is very small, because the region where the heat-weld layers 1 are heat-welded together in the protective welded part Y is within the region cleaned in the step (3). Further, the amount of dust held in the unwelded part having the predetermined width (w8) between the welded part X2 and the protective welded part Y is also very small.

Further, it can be said that there exists almost no dust held in the welded part X1 of the seal part formed in a frame shape composed of the welded part X1 formed before housing the core member, the welded part X2 formed after housing the core member, and the protective welded part Y in the vacuum heat insulator 100A-I. In the manufacturing method of the present invention, the vacuum heat insulator in which the decrease in degree of vacuum is suppressed in a long-term use, can be easily and economically manufactured by adding simple steps (3) and (41) to the conventional method for manufacturing the vacuum heat insulator. The manufacturing method of the present invention can be preferably used, in particular, in the case where the porous body being the core member contains powder that is a factor generating dust.

Next, a method for manufacturing a vacuum heat insulator 100B-I of the present invention in the case where the step (2) is composed of the step (2a) and the step (2b) illustrated in Fig.2 will be described.

In the vacuum heat insulator 100B-I, the welded part X1 is the welded part (pre-housing welded part) formed before the core member 4 is housed in the envelop 3, and the welded part X2 is the welded part (post-housing welded part) formed after the core member 4 is housed in the envelop 3. In the manufacturing method illustrated in Fig. 2, the welded part X2 is formed by the step (2a) and the step (2b). The welded part X1 and the welded part X2 form a frame-shaped welded part without a break in a manner to surround the entire periphery of the core member 4, and make it possible to bring the interior of the envelop 3 housing the core member 4 into a reduced pressure state.

In the manufacturing method illustrated in Fig. 2, the envelop 3 having the unwelded part prepared in the step (1) is entirely the same as the envelop 3 having the unwelded part illustrated by the manufacturing method illustrated in Fig. 1 except that the region of the unwelded part is different.

Specifically, the envelop 3 illustrated in (1) of Fig. 2 is an envelop having a configuration in which two films being rectangle and having the same size, each film having the heat-weld layer 1 and the airtight layer 2 laminated, are superposed with the heat-weld layers 1 of the films facing each other, and having two adjacent sides heat-welded in advance in a predetermined width (w1). In other words, two adjacent sides of the frame-shaped welded part X which is to be finally composed of four sides have been already formed as the welded part X1 and the remaining two adjacent sides are the unwelded part M, so that the envelop 3 has a shape having an opening part 5 corresponding to the unwelded part M.

In the step (1), the envelop 3 formed as described above is prepared, and the core member 4 formed in a plate shape is inserted into the interior of the envelop 3 through the opening part 5. The main surface of the core member 4 illustrated in Fig. 2 has a size with which the outer periphery of the main surface is located on the inner side of the inner periphery of the welded part X, and has a thickness with which the core member 4 can be housed in the interior of the envelop 3.

Even in the case where the shape of the opening part 5 of the envelop 3 is made large in the step (1) as illustrated in Fig. 2 as compared with the case illustrated in Fig. 1, the fact remains that dust is generated due to contact of the core member 4 with the envelop 3, in particular, at the opening part 5 of the envelop 3 at the time when the core member 4 is put into the envelop 3, and the dust 6 adheres to the surfaces of the heat-weld layers 1 near the opening part 5. Accordingly, the manufacturing method of the present invention of performing the post-housing welding step being the step (2) and then performing the cleaning step being the step (3) and the protective welding step being the step (41) shows the effect in obtaining a vacuum heat insulator in which the decrease in degree of vacuum is suppressed in a long-term use.

In the manufacturing method illustrated in Fig. 2, one side of the unwelded part is heat-welded by the step (2a) prior to the welding under reduced pressure in the step (2b) for the core member-housing envelop obtained in the step (1). Then, the remaining one side of the envelop whose three sides have been heat-welded is welded under reduced pressure by the step (2b). The welded part X2 obtained through the heat-welding by the step (2a) is the welded part (post-housing welded part) formed after the core member 4 is housed in the envelop 3. Note that the concrete method of heat-welding by the step (2a) can be the same as the above-described method of heat-welding when forming the protective welded part Y.

The width and the formation position of the welded part X2 obtained by heat-welding by the step (2a) can be the same as the width and the formation position when forming the welded part X2 in the step (2b) in the manufacturing method illustrated in Fig. 1. More specifically, the width of the welded part X2 is preferably 5 to 20 mm, and the formation of the welded part X2 is performed while leaving the end part 7 having the predetermined width (w3) toward the inside from the outer edge of the envelop 3.

In the manufacturing method illustrated in Fig. 2, the step (2b) being the same welding step under reduced pressure as the step (2b) illustrated Fig. 1 is then performed. In the above manner, in the vacuum heat insulator precursor 10b obtained through the steps (1), (2a) and (2b) illustrated in Fig. 2, the welded part X2 at two sides being the post-housing welded part which has been heat-welded after housing the core member is formed in a state of holding the dust 6 as it is which has been generated mainly from the core member 4 in the above step (1) and adhered to the surfaces of the heat-weld layers 1 near the opening part 5. Further, the dust 6 remains on the surfaces of the heat-weld layers 1 facing each other at the end part 7 of the envelop 3 left outside the welded part X2 at the two sides.

Accordingly, cleaning is performed similarly to the above for the end part 7 of the envelop 3 left outside the welded part X2 at the two sides in the step (3), and the protective welded part Y is formed in the width (w4) having the region where the heat-weld layers 1 cleaned in the step (3) are heat-welded together for both of the welded part X2 at the two sides similarly to the above by the step (41). The protective welded part Y is also formed to have an unwelded part having the predetermined width (w8) between the side on the outside of the welded part X2 and the side on the inside of the protective welded part Y at the two sides similarly to the above by the step (41). The protective welded part Y forms a region that is welded in a frame shape without a break in a manner to surround the entire periphery of the core member 4 together with the welded part X1 or only by the protective welded part Y.

In the manufacturing method of the present invention, further in the case using the manufacturing method illustrated in Fig 2. , the vacuum heat insulator 100B-I in which the decrease in degree of vacuum is suppressed in a long-term use, also can be easily and economically manufactured by adding simple steps (3) and (41) to the conventional method for manufacturing the vacuum heat insulator as the case of the vacuum heat insulator 100A-I.

Next, a method for manufacturing the vacuum heat insulator having the configuration of (II) being a preferable configuration in the vacuum heat insulator having the configuration of (I) will be described.

The vacuum heat insulator according to (II) being a preferable configuration of the manufacturing method of the present invention includes an envelop made by arranging films each having a heat-weld layer and an airtight layer such that the heat-weld layers face each other, and a core member housed in an interior of the envelop, the envelop having a welded part which where the heat-weld layers are heat-welded together in a predetermined width over an entire periphery of the core member and a protective welded part formed outside the welded part to partially overlap with at least a part of the welded part, and the vacuum heat insulator having the interior in an reduced-pressure state.

The method for manufacturing the vacuum heat insulator having the configuration of (II) of the present invention is a method for manufacturing the vacuum heat insulator having the above-described configuration of (II) and includes the following steps (1) to (4II).
A step of (1) is housing the core member in the interior of the envelop having an unwelded part where a portion becoming the welded part is unwelded in the welded part (hereinafter, referred to as the step (1) or a "housing step").
A step of (2) is heat-welding the heat-weld layers together under reduced pressure into a state in which all the unwelded part is welded, after or without heat-welding in advance the heat-weld layers of the unwelded part while leaving a part thereof necessary for pressure reduction, for the envelop housing the core member, wherein any of the heat-welding is performed to leave an end part of a predetermined width from an outer edge of the envelop housing the core member (hereinafter, referred to as the step (2) or a "post-housing welding step").
A step of (3) is cleaning surfaces of the heat-weld layers facing each other at the end part of the envelop left outside a post-housing welded part which has been heat-welded after housing the core member (hereinafter, referred to as the step (3) or a "cleaning step").
A step of (411) is forming the protective welded part to have a predetermined overlapping width on an inside from a side on an outside of the post-housing welded part and have a region where the cleaned heat-weld layers are heat-welded together (hereinafter, referred to as the step (411) or a "protective welding step II").

Hereinafter, the steps in the method for manufacturing the vacuum heat insulator having the configuration of (II) of the present invention will be described. Note that in the description using the same drawings as those for the method for manufacturing the vacuum heat insulator having the configuration of (I), redundant description will be omitted. Fig. 1 and Fig. 2 are views schematically illustrating examples of the manufacturing method of the present invention.

The steps (1), (2b) and (3) in Fig. 1 are the same as those of the method for manufacturing the vacuum heat insulator 100A-I having the configuration of (I). The step (411) in the vacuum heat insulator having the configuration of (II) is illustrated at the lower right in Fig. 1, together with the step (41) in the vacuum heat insulator having the configuration of (I).

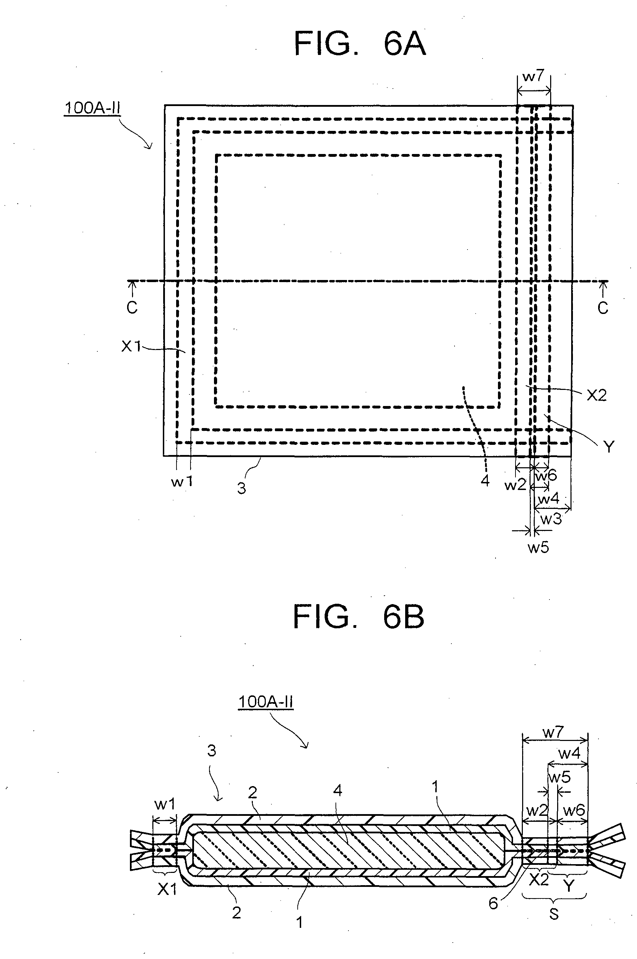

Fig. 6A illustrates a plane view of the vacuum heat insulator 100A-II obtained after completion of the step (411). Fig. 6B is a cross-sectional view of the members whose plane view is illustrated in Fig. 6A.

The vacuum heat insulator having the configuration of (II) and obtained by the manufacturing method schematically illustrated in Fig. 1 is the vacuum heat insulator 100A-II illustrated in Fig. 6A and Fig. 6B. The vacuum heat insulator 100A-II has an envelop 3 made by arranging films each having a heat-weld layer 1 and an airtight layer 2 such that the heat-weld layers 1 face each other, and a core member 4 housed in the interior of the envelop 3. The envelop 3 has welded parts X1, X2 which are located on the outer side of the outer periphery of the core member 4 and where the heat-weld layers 1 are heat-welded together in a predetermined width over the entire periphery of the core member 4.

Note that in the vacuum heat insulator 100A-II, the welded part X1 is the welded part (pre-housing welded part) formed before the core member 4 is housed in the envelop 3, and the welded part X2 is the welded part (post-housing welded part) formed after the core member 4 is housed in the envelop 3. The welded part X1 and the welded part X2 form a frame-shaped welded part without a break in a manner to surround the entire periphery of the core member 4, and make it possible to bring the interior of the envelop 3 housing the core member 4 into a reduced pressure state. Hereinafter, the entire frame-shaped welded part without a break composed of the welded part X1 and the welded part X2 is referred to also as a welded part X.

In the vacuum heat insulator 100A-II illustrated in Fig. 6A and Fig. 6B, the envelop 3 has rectangular main surfaces and film shape, the core member 4 has rectangular main surfaces and plate shape, and the welded part X has an inner periphery and an outer periphery each formed in a rectangular frame shape. In the welded part X of the vacuum heat insulator 100A-II, three sides of the frame are the welded part X1, and the remaining one side is the welded part X2. In the vacuum heat insulator 100A-II, the welded part X2 has a protective welded part Y formed outside the welded part X2 such that the protective welded part Y partially overlaps with the welded part X2, more specifically, the protective welded part Y overlaps with the welded part X2 in a predetermined width toward the inside from the side on the outside of the welded part X2.

By forming the protective welded part Y as described above, the protective welded part Y forms a region where it is welded in a frame shape without a break in a manner to surround the entire periphery of the core member 4 together with the welded part X1. This configuration enables cutting off the welded part X2 formed after the core member 4 is housed in the envelop 3, from an outside atmosphere. As a result, the obtained vacuum heat insulator 100A-II becomes a vacuum heat insulator in which the decrease in degree of vacuum is suppressed.

In the manufacturing method of the vacuum heat insulator having the configuration of (II), it is essential to provide the protective welded part Y formed to partially overlap with the welded part X2 in a manner to cover the side on the outside of the welded part X2 for the welded part X2 formed after the core member 4 is housed in the envelop 3. The protective welded part Y may be provided for the welded part X1, but the welded part X1 is a welded part that is formed before the core member 4 is housed in the envelop 3, so that almost no dust is held in the welded part. Therefore, the protective welded part Y is not always necessary for the welded part X1. Providing the protective welded part Y for the welded part X1 leads to addition of an excessive process to the manufacturing process, causing an increase in cost, but has an advantage giving higher airtightness to the obtained vacuum heat insulator.

Here, another configuration of the above frame-shaped welded part X in the vacuum heat insulator 100A-II may be a configuration in which two sides of the frame are the welded part X1 and the remaining two sides are the welded part X2, a configuration in which one side of the frame is the welded part X1 and the remaining three sides are the welded part X2, or a configuration in which all sides are the welded part X2. In any case, the protective welded part Y is provided outside the welded part X2 in a manner to cover the side on the outside of the welded part X2 and partially overlap with the welded part X2 for the welded part X2 of the welded part X.

Providing the protective welded part Y outside the welded part X2 in a manner to have a overlapping portion in the predetermined width with the welded part X2, for the welded part X2 formed after the core member 4 is housed in the envelop 3 by the method of the present invention, enables manufacture of the vacuum heat insulator in which the decrease in degree of vacuum is suppressed in a long-term use even when the welded part X2 holds dust due to the core member 4 or the like. Providing the overlapping portion makes it easier to suppress the decrease in degree of vacuum in a long-term use than in the case where there is no overlap between the welded part X2 and the protective welded part Y or in the case where the unwelded part exists between the welded part X2 and the protective welded part Y. This can be considered because when the welded part X2 deteriorates earlier than the protective welded part Y, the degree of vacuum decreases due to air remaining in the unwelded part.

### (Step (1))

The step (1) is the same as that for the vacuum heat insulator 100A-I, including preferable aspects.

### <Envelop>

In the method for manufacturing the vacuum heat insulator 100A-II, the envelop is the same as that for the vacuum heat insulator 100A-I, including preferable aspects.

### <Core member>

In the method for manufacturing the vacuum heat insulator 100A-II, the core member is the same as that for the vacuum heat insulator 100A-I, including preferable aspects.

### (Step (2))

In the method for manufacturing the vacuum heat insulator 100A-II, the step (2) is the same as that for the vacuum heat insulator 100A-I, including preferable aspects.

### (Step (3))

In the method for manufacturing the vacuum heat insulator 100A-II, the step (3) is the same as that for the vacuum heat insulator 100A-I, including preferable aspects.

### (Step (411))

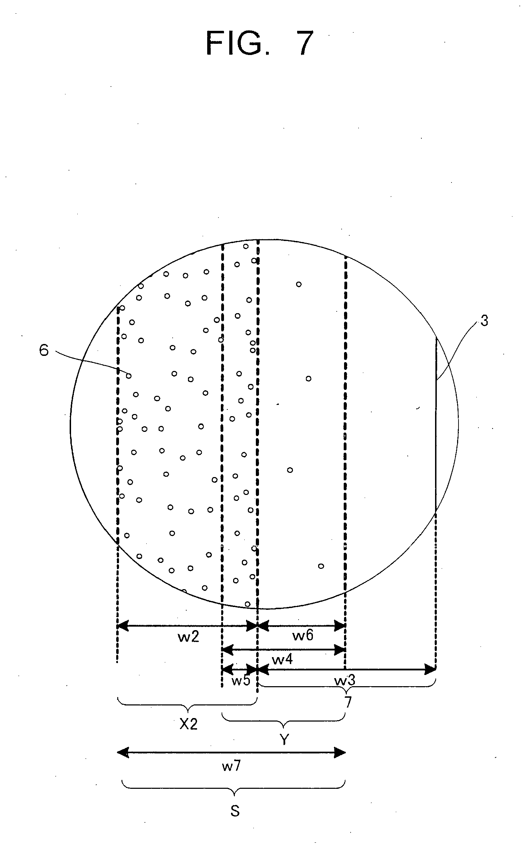

The step (411) is a step of forming the protective welded part Y performed subsequent to the step (3). The vacuum heat insulator 100A-II obtained after the step (411) in the case of employing the step (411) as (4) is illustrated at the lower right in Fig. 1, together with the vacuum heat insulator 100A-I. Figs. 6A and 6B are a plane view and a cross-sectional view of the vacuum heat insulator 100A-II. Fig. 7 is an enlarged plane view of the post-housing welded part X2 and the protective welded part Y of the vacuum heat insulator 100A-II. Using them, the relation between formation regions of the welded part X2 and the protective welded part Y will be described. Note that the dust 6 schematically illustrated in Fig. 7 is not the one existing on the surface of the vacuum heat insulator 100A-II and the one existing at the interface where the facing heat-weld layers are heat-welded together.

In the step (411), the protective welded part Y is formed in the width (w4) having the predetermined overlapping width (w5) on the inside from the side on the outside of the welded part X2 being the post-housing welded part heat-welded after housing the core member, and having a region where the heat-weld layers 1 cleaned in the step (3) are heat-welded together.

The protective welded part Y is formed outside the welded part X2 to be parallel with the welded part X2, overlap with the welded part X2 in the predetermined width (w5) over the entire length of the side on the outside of the welded part X2, and have the width (w4) larger than the overlapping width (w5). A region outside the side on the outside of the welded part X2 in the protective welded part Y is the region where the heat-weld layers 1 cleaned in the step (3) are heat-welded together. Here, the width (w4) of the protective welded part Y is set such that a value obtained by subtracting the overlapping width (w5) from the width (w4), namely, a width (w6) of the region where the heat-weld layers 1 cleaned in the step (3) are heat-welded together does not exceed the width (w3) of the end part 7 of the envelop 3. In other words, the side on the outside of the protective welded part Y is formed to be located on the inner side of the outer periphery of the envelop 3.

The overlapping width (w5) of the protective welded part Y and the welded part X2 may be the same as the width (w2) of the welded part X2 at maximum. From the viewpoint of keeping high sealing effect, the overlapping width (w5) is preferably 1 to 5 mm, and more preferably 2 to 4 mm. Further, from the viewpoint of similarly keeping high sealing effect, the width (w4) of the protective welded part Y is preferably 3 to 15 mm, and more preferably 5 to 10 mm. Furthermore, the width (w6) of the region where the heat-weld layers 1 cleaned in the step (3) are heat-welded together in the protective welded part Y is preferably 2 to 10 mm, and more preferably 3 to 8 mm.

As described above, the seal part S is constituted by combining the welded part X2 and the protective welded part Y formed to overlap with the welded part X2 in the predetermined width. A width (w7) of the seal part S is expressed by w2 + w6, and is preferably 12 to 20 mm, and more preferably 15 to 18 mm. Further, the distance from the side on the outside of the seal part to the outer periphery of the envelop is preferably 0 to 15 mm, and more preferably 1 to 10 mm.

Note that the same condition as that in the case of usually heat-welding the heat-weld layers of the above-described envelop together is applicable to the condition of the heat-welding when forming the protective welded part Y. Further, the material constituting the heat-weld layer of the envelop is as described above, and a preferable welding temperature is set in accordance with the material in the heat-welding. Furthermore, the heat-welding is usually performed under a pressurized condition of about 1 to 5 kg/cm². Here, in this specification, the heat-welding other than the heat-welding performed under reduced pressure is performed in a normal-pressure environment unless otherwise stated.

In the vacuum heat insulator 100A-II obtained as described above, a substantial amount of the dust 6 is held in the welded part X2 at the seal part S composed of the protective welded part Y and the welded part X2, whereas the amount of dust is very small in the region where the heat-weld layers 1 cleaned in the step (3) are heat-welded together of the protective welded part Y as illustrated in Fig. 7. Further, it can be said that there exists almost no dust held in the welded part X1 of the seal part formed in a frame shape composed of the welded part X1 formed before housing the core member, the welded part X2 formed after housing the core member, and the protective welded part Y in the vacuum heat insulator 100A-II. In the manufacturing method of the present invention for the vacuum heat insulator having the configuration of (II), the vacuum heat insulator in which the decrease in degree of vacuum is suppressed in a long-term use, can be easily and economically manufactured by adding simple steps (3) and (411) to the conventional method for manufacturing the vacuum heat insulator. The manufacturing method of the present invention for the vacuum heat insulator having the configuration of (II) can be preferably used, in particular, in the case where the porous body being the core member contains powder that is a factor generating dust.

Next, a method for manufacturing a vacuum heat insulator 100B-II in the case where the step (2) is composed of the step (2a) and the step (2b) illustrated in Fig.2 will be described.

In a vacuum heat insulator 100B-II, the welded part X1 is the welded part (pre-housing welded part) formed before the core member 4 is housed in the envelop 3, and the welded part X2 is the welded part (post-housing welded part) formed after the core member 4 is housed in the envelop 3. In the manufacturing method illustrated in Fig. 2, the welded part X2 is formed by the step (2a) and the step (2b). The welded part X1 and the welded part X2 form a frame-shaped welded part without a break in a manner to surround the entire periphery of the core member 4, and make it possible to bring the interior of the envelop 3 housing the core member 4 into a reduced pressure state.

In the manufacturing method illustrated in Fig. 2, the envelop 3 having the unwelded part prepared in the step (1) is entirely the same as the envelop 3 having the unwelded part illustrated by the manufacturing method illustrated in Fig. 1 except that the region of the unwelded part is different.

Specifically, the envelop 3 illustrated in (1) of Fig. 2 is an envelop having a configuration in which two films being rectangle and having the same size, each film having the heat-weld layer 1 and the airtight layer 2 laminated, are superposed with the heat-weld layers 1 of the films facing each other, and having two adjacent sides heat-welded in advance in a predetermined width (w1). In other words, two adjacent sides of the frame-shaped welded part X which is to be finally composed of four sides have been already formed as the welded part X1 and the remaining two adjacent sides are the unwelded part M, so that the envelop 3 has a shape having an opening part 5 corresponding to the unwelded part M.

In the step (1), the envelop 3 formed as described above is prepared, and the core member 4 formed in a plate shape is inserted into the interior of the envelop 3 through the opening part 5. The main surface of the core member 4 illustrated in Fig. 2 has a size with which the outer periphery of the main surface is located on the inner side of the inner periphery of the welded part X, and has a thickness with which the core member 4 can be housed in the interior of the envelop 3.

Even in the case where the shape of the opening part 5 of the envelop 3 is made large in the step (1) as illustrated in Fig. 2 as compared with the case illustrated in Fig. 1, the fact remains that dust is generated due to contact of the core member 4 with the envelop 3, in particular, at the opening part 5 of the envelop 3 at the time when the core member 4 is put into the envelop 3, and the dust 6 adheres to the surfaces of the heat-weld layers 1 near the opening part 5. Accordingly, the preferable manufacturing method of the present invention of performing the post-housing welding step being the step (2) and then performing the cleaning step being the step (3) and the protective welding step being the step (411) shows the effect in obtaining a vacuum heat insulator in which the decrease in degree of vacuum is suppressed in a long-term use.

In the manufacturing method illustrated in Fig. 2, one side of the unwelded part is heat-welded by the step (2a) prior to the welding under reduced pressure of the step (2b) for the core member-housing envelop obtained in the step (1). Then, the remaining one side of the envelop whose three sides have been heat-welded is welded under reduced pressure by the step (2b). The welded part X2 obtained through the heat-welding by the step (2a) is the welded part (post-housing welded part) formed after the core member 4 is housed in the envelop 3. Note that the concrete method of heat-welding by the step (2a) can be the same as the above-described method of heat-welding when forming the protective welded part Y.

The width and the formation position of the welded part X2 obtained by heat-welding by the step (2a) can be the same as the width and the formation position when forming the welded part X2 in the step (2b) in the manufacturing method illustrated in Fig. 1. More specifically, the width of the welded part X2 is preferably 5 to 20 mm, and the formation of the welded part X2 is performed while leaving the end part 7 having the predetermined width (w3) toward the inside from the outer edge of the envelop 3.

In the manufacturing method illustrated in Fig. 2, the step (2b) being the same welding step under reduced pressure as the step (2b) illustrated Fig. 1 is then performed. In the above manner, in the vacuum heat insulator precursor 10b obtained through the steps (1), (2a) and (2b) illustrated in Fig. 2, the welded part X2 at two sides being the post-housing welded part which has been heat-welded after housing the core member is formed in a state of holding the dust 6 as it is which has been generated mainly from the core member 4 in the above step (1) and adhered to the surfaces of the heat-weld layers 1 near the opening part 5. Further, the dust 6 remains on the surfaces of the heat-weld layers 1 facing each other at the end part 7 of the envelop 3 left outside the welded part X2 at the two sides.

Accordingly, cleaning is performed similarly to the above for the end part 7 of the envelop 3 left outside the welded part X2 at the two sides in the step (3), and the protective welded part Y is formed in the width (w4) having the predetermined overlapping width (w5) on the inside from the side on the outside of the welded part X2, and having the region where the heat-weld layers 1 cleaned in the step (3) are heat-welded together for each of both the welded part X2 at the two sides similarly to the above by the step (411).

In the preferable manufacturing method of the present invention, further in the case using the manufacturing method illustrated in Fig 2., the vacuum heat insulator 100B-II in which the decrease in degree of vacuum is suppressed in a long-term use, also can be easily and economically manufactured by adding simple steps (3) and (411) to the conventional method for manufacturing the vacuum heat insulator as the case of the vacuum heat insulator 100A-II.

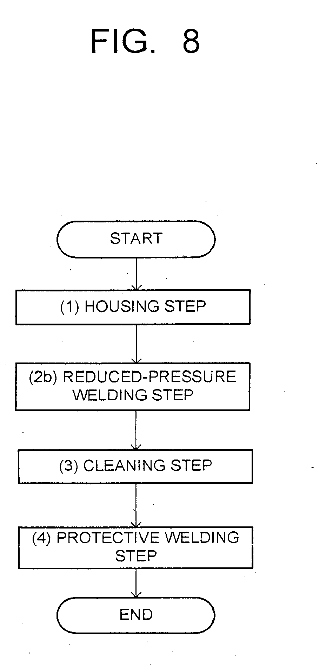

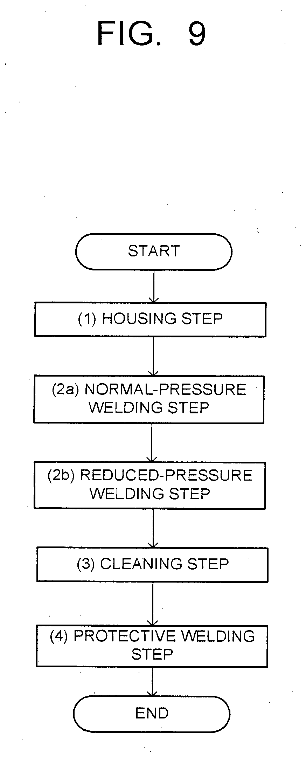

Fig. 8 is a flowchart illustrating the flow of the steps (1) to (4) when manufacturing the vacuum heat insulator 100A-I and the vacuum heat insulator 100A-II (hereinafter, the vacuum heat insulator 100A-I and the vacuum heat insulator 100A-II are collectively referred also to as a "vacuum heat insulator 100A") by the schematic view illustrated in above-described Fig. 1. Besides, Fig. 9 is a flowchart illustrating the flow of the steps (1) to (4) when manufacturing the vacuum heat insulator 100B-I and the vacuum heat insulator 100B-II (hereinafter, the vacuum heat insulator 100B-I and the vacuum heat insulator 100B-II are collectively referred also to as a "vacuum heat insulator 100B") by the schematic view illustrated in above-described Fig. 2.

The method for manufacturing the vacuum heat insulator in the embodiment of the present invention has been described above using the vacuum heat insulators 100A and 100B as examples by the schematic views illustrated in Fig. 1 and Fig. 2, and the condition in each step, the order of steps and so on can be appropriately changed without departing from the scope of the present invention in the manufacturing method of the present invention. Further, steps other than the above described ones may be provided as necessary.

For example, for the vacuum heat insulator having the welded part X formed in a frame shape by four sides, the welded part X2 may be formed, as necessary, by housing the core member in an envelop having no welded part X1 being the pre-housing welded part heat-welded before housing the core member in the step (1), and heat-welding three sides by the step (2a) and heat-welding the remaining one side under reduced pressure by the step (2b) in the step (2). In this case, the protective welded part Y is formed by the step (3) and the step (4) similarly to the above for all of the four sides of the welded part X.

### [Vacuum heat insulator]

The vacuum heat insulator of the present invention includes an envelop made by arranging films each having a heat-weld layer and an airtight layer such that the heat-weld layers face each other, and a core member housed in a reduced pressure state in the interior of the envelop, the envelop having a seal part where the heat-weld layers are stuck together by heat-welding in a region over an entire periphery of the core member on an outer side of an outer periphery of the core member, wherein an amount of dust of the core member held by the seal part in an outside region of the seal part is small as compared with an inside region of the seal part, at least at a part of the seal part.

Examples of the vacuum heat insulator include a vacuum heat insulator obtained by the above-described manufacturing method of the present invention, specifically, the vacuum heat insulator 100A illustrated in Fig. 1, Fig. 5A, Fig. 5B, Fig. 6A, Fig. 6B and Fig. 7 and the vacuum heat insulator 100B illustrated in Fig. 2.

In Fig. 5A and Fig. 5B, the vacuum heat insulator 100A-I has the envelop 3 made by arranging -films each having the heat-weld layer 1 and the airtight layer 2 such that the heat-weld layers 1 face each other, and the core member 4 housed in a reduced pressure state in the interior of the envelop 3, in which the envelop 3 has the seal part where the heat-weld layers 1 are stuck together by heat-welding in a region over the entire periphery of the core member 4 on the outer side of the outer periphery of the core member 4. The seal part is composed of the welded part (pre-housing welded part) X1 formed before housing the core member, the welded part (post-housing welded part) X2 formed after housing the core member, and the protective welded part Y (including the unwelded part between the welded part X2 and the protective welded part Y) formed outside the welded part X2.

In Fig. 6A and Fig. 6B, the vacuum heat insulator 100A-II has the envelop 3 made by arranging films each having the heat-weld layer 1 and the airtight layer 2 such that the heat-weld layers 1 face each other, and the core member 4 housed in a reduced pressure state in the interior of the envelop 3, in which the envelop 3 has the seal part where the heat-weld layers 1 are stuck together by heat-welding in a region over the entire periphery of the core member 4 on the outer side of the outer periphery of the core member 4. The seal part is composed of the welded part (pre-housing welded part) X1 formed before housing the core member, the welded part (post-housing welded part) X2 formed after housing the core member, and the protective welded part Y formed outside the welded part X2 to partially overlap with the welded part X2.

In the vacuum heat insulator 100A-I, in the seal part S composed of the welded part X2, the protective welded part Y formed outside the welded part X2, and the unwelded part between the welded part X2 and the protective welded part Y, though not illustrated, the amount of the dust held by the seal part in an outside region of the seal part S, here, the unwelded part having the predetermined width (w8) between the welded part X2 and the protective welded part Y and the protective weld layer Y having the predetermined width (w4) is small as compared with an inside region of the seal part S, here, the formation region of the welded part X2 having the predetermined width (w2).

In the vacuum heat insulator 100A-II, in the seal part S composed of the welded part X2 and the protective welded part Y formed outside the welded part X2 to partially overlap with the welded part X2, as illustrated in Fig. 7, the amount of the dust 6 held by the seal part in an outside region of the seal part S, here, a region having the predetermined width (w6) in the protective weld layer Y except the portion overlapping with the welded part X2 is small as compared with an inside region of the seal part S, here, the formation region of the welded part X2 having the predetermined width (w2). The width (w2) of the welded part X2 and the width (w6) of the region in the protective weld layer Y except the portion overlapping with the welded part X2 are concretely as described above.

Note that the dust 6 illustrated in Fig. 7 is illustrated as all dust including the dust caused by the core member 4. The dust 6 is mainly caused by the core member 4, and the amount of dust of the core member in the seal part S of the vacuum heat insulator 100A can be said to be small in the outside region as compared with the inside region.

The envelop and the core member in the vacuum heat insulator of the present invention can be the same as those described by the method for manufacturing the vacuum heat insulator of the present invention, including preferable aspects. For example, as the core member used in the vacuum heat insulator of the present invention, a compression-molded body containing powder and fiber is preferably used.

The vacuum heat insulator in the embodiment of the present invention has been described above using the vacuum heat insulator 100A-I and the vacuum heat insulator 100A-II illustrated in Fig. 1, Figs. 5A, 5B, Figs. 6A, 6B and Fig. 7 as examples, and the designs of the shape, material and so on of constituting members can be appropriately changed without departing from the scope of the present invention in the vacuum heat insulator of the present invention. Further, constituting members other than the above described ones may be provided as necessary.

### Examples

A vacuum heat insulator having the same configuration as that of the vacuum heat insulator 100A-II was fabricated by the same manufacturing method as that illustrated in Fig. 1, and the amount of dust in the seal part was observed and evaluated. Note that description will be made with the same signs as those illustrated in Fig. 1 given to the members in the following.

### (Fabrication of the core member)

To 100 parts by mass of fumed silica (tradename "CAB-O-SIL H-300", specific surface area 300 m²/g, manufactured by Cabot Specialty Chemicals Inc.), 10 parts by mass of silica magnesia calcia fiber (tradename "Suerwool Bulk" manufactured by Shin-Nippon Thermal Corporation" was added and they were mixed together by a blender to obtain a mixed powder. The obtained mixed powder was put into a mold, molded into a flat plate shape of 80 mm long × 80 mm wide × 15 mm thick under pressure, and then heated at 200°C for 1 hour to thereby fabricate a compression-molded body being the core member 4.

### (Step (1))

A commercially available transparent gas barrier film (envelop) 3 (tradename "Standard Bag for Vacuum Package with Magic Cut, Hiryu", manufactured by Asahi Kasei Pax Corporation) was prepared in which two films being square and having the same size each film having the heat-weld layer 1 and the airtight layer 2 laminated were superposed with the heat-weld layers 1 of the films facing each other, and configured such that three sides were heat-welded to have the welded part X1 and the remaining one side was not heat-welded to have the opening part 5. The core member 4 obtained in the above was inserted into the interior of the transparent gas barrier film 3 through the opening part 5 of the transparent gas barrier film 3 to obtained the core member-housing envelop 10a.

### (Step (2))

For the core member-housing envelop 10a obtained in the above, the unwelded part at the remaining one side was heat-welded in a width (w2) of 10 mm so that the width (w3) of the end part 7 of the transparent gas barrier film 3 was about 25 mm in state of reducing the pressure in the chamber using the vacuum chamber with heat welding function, to form and hermetically seal the welded part X2, thereby obtaining the vacuum heat insulator precursor 10b.

Though observation of the taken out vacuum heat insulator precursor 10b, the appearance in which powder remained at every portion on the inner surface side of the film on the inside of the welded part X2 of the transparent gas barrier film 3 was recognized, and the appearance in which powder remained here and there on the inner surface side of the film at the welded part X2 heat-welded in the vacuum chamber and also at the end part 7 left outside the welded part X2 was observed.

### (Step (3))

Then, the powder adhering to the inner surface, namely, the surfaces of the heat-weld layers 1 facing each other, at the end part 7 of the transparent gas barrier film 3 left outside the welded part X2, was removed using wet wipes to an extent that the powder remained no longer at least by visually. Thereafter, the cleaned portion was sufficiently dried.

### (Step (411))

A heat welded part with a width (w4) of 12 mm was formed as the protective welded part Y, to be parallel with the welded part X2 outside the welded part X2 so that the overlapping width (w5) with the welded part X2 was about 2 mm. Comparing the welded part X 2 with the region of a width (w6) of 10 mm obtained by excepting the region of the overlapping width from the protective welded part Y, residual powder was not recognized visually in the region obtained by excepting the region of the overlapping width from the protective welded part Y (region subjected to the cleaning and then welding).

### INDUSTRIAL APPLICABILITY

The vacuum heat insulator of the present invention is applicable to portions requiring hot insulation, cold insulation, and heat insulation which are required to save energy. More specifically, the vacuum heat insulator of the present invention is applicable to, for example: household equipment field such as wall, roof, floor, and pipe of houses and buildings, solar light and heat facilities and so on; hot insulation and cold insulation field such as constant temperature bath, water heater, hot water storage tank, rice cooker, refrigerator, freezer, cold container and cold tank, liquefied gas tank, vending machine, cold box, cold insulation cover, cold weather gear and so on; industrial equipment field such as electric and electronic equipment such as notebook computer, liquid-crystal projector, copy machine, battery, fuel cell and so on, semiconductor manufacturing apparatus and so on; movable body field such as automobile, bus, truck, insulated truck, train, freight car, ship and so on; and pipe of plant and so on.

### EXPLANATION OF REFERENCE SIGNS

100A-I, 100A-II, 100B-I, 100B-II ... vacuum heat insulator, 10a ... core member-housing envelop, 10b ... vacuum heat insulator precursor
1 ... heat-weld layer, 2 ... airtight layer, 3 ... envelop, 4 ... core member, 5 ... opening part, 6 ... dust, 7 ... end part
X1 ... welded part formed before housing core member (pre-housing welded part), X2 ... welded part formed after housing core member (post-housing welded part), Y ... protective welded part

## Claims

1. A method for manufacturing a vacuum heat insulator (100A-I, 100A-II, 100B-I, 100B-II), the vacuum heat insulator (100A-I, 100A-II, 100B-I, 100B-II) comprising an envelop (3) made by arranging films each having a heat-weld layer (1) and an airtight layer (2) such that the heat-weld layers (1) face each other, and a core member (4) housed in an interior of the envelop (3), the envelop (3) having a welded part (X1, X2) where the heat-weld layers (1) are heat-welded together in a predetermined width over an entire periphery of the core member (4) and a protective welded part (Y) formed outside the welded part, and the vacuum heat insulator (100A-I, 100A-II, 100B-I, 100B-II) having the interior in an reduced-pressure state, the method comprising the steps of:
housing the core member (4) in the interior of the envelop (3) having an unwelded part (X2) where a portion becoming later the welded part is still unwelded;
heat-welding the heat-weld layers (1) together under reduced pressure into a state in which all the unwelded part (X2) is welded, after or without heat-welding in advance the heat-weld layers (1) of the unwelded part (X2) while leaving a part thereof necessary for pressure reduction, for the envelop (3) housing the core member (4), wherein any of the heat-welding is performed to leave outside of the welded part an end part (7) of a predetermined width from an outer edge of the envelop (3) housing the core member (4);
cleaning surfaces of the heat-weld layers (1) facing each other at the end part (7) of the envelop (3) left outside a post-housing welded part (X2) which has been heat-welded after housing the core member (4), wherein the cleaning is at least one selected from the group consisting of wiping out a dust (6) on the surfaces using paper or cloth, causing the dust (6) to adhere to a sticky material, blowing away the dust (6) by blowing of air, and sucking the dust (6) by a vacuum cleaner; and
forming the protective welded part (Y) to have a region where the cleaned heat-weld layers (1) are heat-welded together outside the post-housing welded part (X2).

2. The method for manufacturing a vacuum heat insulator (100A-I, 100A-II, 100B-I, 100B-II) according to claim 1,
wherein the vacuum heat insulator (100A-II, 100B-II) has a protective welded part (Y) formed outside the welded part (X1, X2) to partially overlap with at least a part of the welded part (X1, X2), and
wherein the step of forming the protective welded part (Y) is the step of forming the protective welded part (Y) to have a predetermined overlapping width on an inside from a side on an outside of the post-housing welded part (X2) and have a region where the cleaned heat-weld layers (1) are heat-welded together.

3. The method for manufacturing a vacuum heat insulator (100A-I, 100A-II, 100B-I, 100B-II) according to claim 1 or 2,
wherein the core member (4) is a compression-molded body containing powder and fiber.

4. The method for manufacturing a vacuum heat insulator (100A-II, 100B-II) according to claim 2 or 3,
wherein the overlapping width of the protective welded part (Y) and the post-housing welded part (X2) is 1 to 5 mm.

5. The method for manufacturing a vacuum heat insulator (100A-I, 100A-II, 100B-I, 100B-II) according to any one of claims 1 to 4, wherein an amount of dust (6) of the core member (4) held by a seal part in an outside region of the seal part is small as compared with an inside region of the seal part, at least at a part of the seal part;
wherein the seal part is composed of the welded part (X1, X2); the welded part (X1, X2), the protective welded part (Y), and an unwelded part between the welded part (X1, X2) and the protective welded part (Y); or a welded part where the welded part (X1, X2) and the protective welded part (Y) are united together.

## Patentansprüche

1. Verfahren zur Herstellung eines Vakuumwärmeisolators (100A-I, 100A-II, 100B-I, 100B-II), wobei der Vakuumwärmeisolator (100A-I, 100A-II, 100B-I, 100B-II) eine Hülle (3), hergestellt durch Anordnen von Filmen mit jeweils einer Wärmeschweißschicht (1) und einer luftdichten Schicht (2) derart, dass die Wärmeschweißschichten (1) einander zugewandt sind, und ein Kernelement (4), das in einem Inneren der Hülle (3) untergebracht ist, umfasst, wobei die Hülle (3) einen verschweißten Teil (X1, X2), in welchem die Wärmeschweißschichten (1) in einer vorbestimmten Breite über einen gesamten Umfang des Kernelements (4) miteinander wärmeverschweißt sind, und einen außerhalb des verschweißten Teils ausgebildeten schützenden verschweißten Teil (Y) aufweist, und der Vakuumwärmeisolator (100A-I, 100A-II, 100B-I, 100B-II) das Innere in einem Unterdruckzustand aufweist, wobei das Verfahren die Schritte umfasst:
das Unterbringen des Kernelements (4) im Inneren der Hülle (3) mit einem unverschweißten Teil (X2), in welchem ein Abschnitt, der später zum verschweißten Teil wird, noch unverschweißt ist;
das Wärmeschweißen der Wärmeschweißschichten (1) miteinander unter vermindertem Druck in einen Zustand, in dem der ganze unverschweißte Teil (X2) verschweißt ist, nach oder ohne vorheriges Wärmeschweißen der Wärmeschweißschichten (1) des unverschweißten Teils (X2) unter Beibehaltung eines Teils davon, der für die Druckreduzierung erforderlich ist, für die Hülle (3), die das Kernelement (4) unterbringt, wobei jedes Wärmeschweißen durchgeführt wird, um außerhalb des verschweißten Teils ein Endteil (7) einer vorbestimmten Breite von einer Außenkante der Hülle (3), die das Kernelement (4) unterbringt, zu belassen;
das Reinigen von Oberflächen der Wärmeschweißschichten (1), einander zugewandt an dem Endteil (7) der Hülle (3), belassen außerhalb eines nach-Unterbringen-verschweißten Teils (X2), der nach dem Unterbringen des Kernelements (4) wärmeverschweißt wurde, wobei das Reinigen mindestens eines ist, ausgewählt aus der Gruppe, bestehend aus Auswischen eines Staubs (6) auf den Oberflächen unter Verwendung von Papier oder Tuch, Bewirken des Haftens des Staubs (6) an einem klebrigen Material, Wegblasen des Staubs (6) durch Blasen von Luft und Absaugen des Staubs (6) durch einen Staubsauger; und
das Bilden des schützenden verschweißten Teils (Y), um einen Bereich aufzuweisen, in dem die gereinigten Wärmeschweißschichten (1) außerhalb des nach-Unterbringen-verschweißten Teils (X2) miteinander wärmeverschweißt sind.

2. Verfahren zur Herstellung eines Vakuumwärmeisolators (100A-I, 100A-II, 100B-I, 100B-II) nach Anspruch 1,
wobei der Vakuumwärmeisolator (100A-II, 100B-II) einen schützenden verschweißten Teil (Y) aufweist, gebildet außerhalb des verschweißten Teils (X1, X2), um teilweise mit mindestens einem Teil des verschweißten Teils (X1, X2) zu überlappen, und
wobei der Schritt des Bildens des schützenden verschweißten Teils (Y) der Schritt des Bildens des schützenden verschweißten Teils (Y) ist, um eine vorbestimmte Überlappungsbreite auf einer Innenseite von einer Seite auf einer Außenseite des nach-Unterbringen-verschweißten Teils (X2) aufzuweisen und einen Bereich aufzuweisen, in dem die gereinigten Wärmeschweißschichten (1) miteinander wärmeverschweißt sind.

3. Verfahren zur Herstellung eines Vakuumwärmeisolators (100A-I, 100A-II, 100B-I, 100B-II) nach Anspruch 1 oder 2,
wobei das Kernelement (4) ein formgepresster Körper ist, der Pulver und Fasern enthält.

4. Verfahren zur Herstellung eines Vakuumwärmeisolators (100A-II, 100B-II) nach Anspruch 2 oder 3,
wobei die Überlappungsbreite des schützenden verschweißten Teils (Y) und des nach-Unterbringen-verschweißten Teils (X2) 1 bis 5 mm beträgt.

5. Verfahren zur Herstellung eines Vakuumwärmeisolators (100A-I, 100A-II, 100B-I, 100B-II) nach einem der Ansprüche 1 bis 4, wobei eine Menge an Staub (6) des Kernelements (4), die von einem Dichtungsteil in einem Außenbereich des Dichtungsteils gehalten wird, im Vergleich zu einem Innenbereich des Dichtungsteils, zumindest an einem Teil des Dichtungsteils, klein ist;
wobei der Dichtungsteil aus dem verschweißten Teil (X1, X2); dem verschweißten Teil (X1, X2), dem schützenden verschweißten Teil (Y) und einem unverschweißten Teil zwischen dem verschweißten Teil (X1, X2) und dem schützenden verschweißten Teil (Y); oder einem verschweißten Teil, in welchem der verschweißte Teil (X1, X2) und der schützende verschweißte Teil (Y) miteinander verbunden sind, zusammengesetzt ist.

## Revendications

1. Procédé de fabrication d'un isolant thermique sous vide (100A-I, 100A-II, 100B-I, 100B-II), l'isolant thermique sous vide (100A-I, 100A-II, 100B-I, 100B-II) comprenant une enveloppe (3) réalisée en agençant des films ayant chacun une couche thermosoudée (1) et une couche étanche à l'air (2) de sorte que les couches thermosoudées (1) sont tournées l'une vers l'autre, et un élément de noyau (4) hébergé dans un intérieur de l'enveloppe (3), l'enveloppe (3) ayant une partie soudée (X1, X2) où les couches thermosoudées (1) sont thermosoudées ensemble dans une largeur prédéterminée sur une périphérie entière de l'élément de noyau (4) et une partie soudée protectrice (Y) formée en dehors de la partie soudée, et l'isolant thermique sous vide (100A-I, 100A-II, 100B-I, 100B-II) ayant l'intérieur dans un état à pression réduite, le procédé comprenant les étapes consistant à :
héberger l'élément de noyau (4) dans l'intérieur de l'enveloppe (3) ayant une partie non soudée (X2) où une portion devenant ultérieurement la partie soudée est encore non soudée ;
thermosouder les couches thermosoudées (1) ensemble sous pression réduite dans un état dans lequel toute la partie non soudée (X2) est soudée, après ou sans thermosoudure en avance des couches thermosoudées (1) de la partie non soudée (X2) tout en laissant une partie de celle-ci nécessaire pour une réduction de pression, pour l'enveloppe (3) hébergeant l'élément de noyau (4), dans lequel une partie quelconque de la thermosoudure est réalisée pour laisser en dehors de la partie soudée une partie d'extrémité (7) d'une largeur prédéterminée depuis un bord externe de l'enveloppe (3) hébergeant l'élément de noyau (4) ;
nettoyer des surfaces des couches thermosoudées (1) tournées l'une vers l'autre au niveau de la partie d'extrémité (7) de l'enveloppe (3) laissée en dehors d'une partie soudée post-hébergement (X2) qui a été thermosoudée après l'hébergement de l'élément de noyau (4), dans lequel le nettoyage est au moins un sélectionné parmi le groupe constitué du fait d'essuyer une poussière (6) sur les surfaces en utilisant du papier ou un chiffon, amener la poussière (6) à adhérer à un matériau collant, faire s'envoler la poussière (6) en soufflant de l'air, et aspirer la poussière (6) par un aspirateur ; et
former la partie soudée protectrice (Y) pour avoir une région où les couches thermosoudées nettoyées (1) sont thermosoudées ensemble en dehors de la partie soudée post-hébergement (X2).

2. Procédé de fabrication d'un isolant thermique sous vide (100A-I, 100A-II, 100B-I, 100B-II) selon la revendication 1,
dans lequel l'isolant thermique sous vide (100A-II, 100B-II) a une partie soudée protectrice (Y) formée en dehors de la partie soudée (X1, X2) pour chevaucher partiellement au moins une partie de la partie soudée (X1, X2), et
dans lequel l'étape de formation de la partie soudée protectrice (Y) est l'étape de formation de la partie soudée protectrice (Y) pour avoir une largeur de chevauchement prédéterminée sur un intérieur depuis un côté sur un extérieur de la partie soudée post-hébergement (X2) et avoir une région où les couches thermosoudées nettoyées (1) sont thermosoudées ensemble.

3. Procédé de fabrication d'un isolant thermique sous vide (100A-I, 100A-II, 100B-I, 100B-II) selon la revendication 1 ou 2,
dans lequel l'élément de noyau (4) est un corps moulé par compression contenant de la poudre et fibre.

4. Procédé de fabrication d'un isolant thermique sous vide (100A-II, 100B-II) selon la revendication 2 ou 3,
dans lequel la largeur de chevauchement de la partie soudée protectrice (Y) et la partie soudée post-hébergement (X2) est de 1 à 5 mm.

5. Procédé de fabrication d'un isolant thermique sous vide (100A-I, 100A-II, 100B-I, 100B-II) selon l'une quelconque des revendications 1 à 4, dans lequel une quantité de poussière (6) de l'élément de noyau (4) maintenu par une partie de joint dans une région extérieure de la partie de joint est faible par rapport à une région intérieure de la partie de joint, au moins au niveau d'une partie de la partie de joint ;
dans lequel la partie de joint est composée de la partie soudée (X1, X2) ; de la partie soudée (X1, X2), la partie soudée protectrice (Y) et d'une partie non soudée entre la partie soudée (X1, X2) et la partie soudée protectrice (Y) ; ou d'une partie soudée où la partie soudée (X1, X2) et la partie soudée protectrice (Y) sont unies ensemble.
